# EUROPEAN PATENT APPLICATION

(11) **EP 1 832 216 A1**
(43) Date of publication of application: **12.09.2007**
(21) Application number: 06015764.1
(22) Date of filing: 28.07.2006
(51) Int. Cl.: A47L 9/24

(54) **Flexible hose and vacuum cleaner having the same**

(30) Priority: 09.03.2006 KR 20060022411
(71) Applicant: Samsung Gwangju Electronics Co., Ltd., Gwangju-city (KR)
(72) Inventor: Yang, Dong-houn, Seo-gu Gwangju-city (KR); Lee, Hyun-ju, Gwangsan-gu Gwangju-city (KR); Uratani, Hiroyuki, Gwangsan-gu Gwangju-city (KR)
(74) Representative: Käck, Jürgen

(57) **Abstract**

A vacuum cleaner includes a cleaner body; a suction part touching a surface to be cleaned, the suction part drawing-in contaminants on the surface to be cleaned; an extension pipe connected the suction part; and a flexible hose connecting the extension pipe with the cleaner body, wherein the flexible hose comprises: a bellow pipe wall with a plurality of peaks (11) and valleys (13); and an auxiliary peak (11b) and an auxiliary valley (11a) formed in each of the plurality of peaks (11). A noise decreasing part (13a) is formed at an inner surface of the valley (13). The structure of the flexible hose prevents the flexible hose from deforming and decreases the friction noise of the fluid.

## Description

### BACKGROUND OF THE INVENTION

### 1. Field of the Invention

The present invention relates to a flexible hose and a vacuum cleaner having the same. More particularly, the present invention relates to a flexible hose having a less change of a shape thereof and a lower noise than the conventional flexible hose and a vacuum cleaner having the same.

### 2. Description of the Related Art

Generally, a vacuum cleaner includes a cleaner body, a suction part drawing-in contaminants on a surface to be cleaned, a control part controlling the vacuum cleaner, an extension pipe connecting the suction part with the control part, and a flexible hose connecting the control part with the cleaner body.

Accordingly, the contaminants on the surface to be cleaned are drawn-in into the suction part, and then, are supplied via the extension pipe and the flexible hose to a dust collecting chamber disposed in the cleaner body.

At this time, for preventing the flexible hose from deforming, a reinforcing material, for an example, a metal wire is windingly disposed in a helical shape on an inner circumferential surface of the flexible hose.

An example of the above configuration of the flexible hose is showed in Japanese Patent Publication No. 2003-190062.

In Japanese Patent Publication No. 2003-190062, a plurality of coated wires each composed of a steel wire and a coating with a urethane resin material, are windingly disposed in a helical shape keeping a described interval on an inner face side of a flexible hose formed with the PVC resin material, and are adhered to the flexible hose by hot-melting or with an adhesive.

However, the above-described flexible hose generates a frictional noise because air passing trough the flexible hose collides with the inner face side of the flexible hose.

A configuration of the flexible hose to reduce the friction noise is showed in Japanese Patent Publication No. 2004-154369.

In Japanese Patent Publication No. 2004-154369, in the flexible hose, rigid reinforcing elements are helically wound around and annexed to an inner circumferential surface of a hose wall of a soft synthetic resin, and a sound absorbing material is helically disposed in a gap adjacent to the reinforcing elements.

However, the conventional flexible hoses require the reinforcing elements or the rigid reinforcing elements such as a hard metal wire for reinforcing the flexible hose so that the material cost for the flexible hose is increased and the manufacturing process of the flexible hose is complex.

Furthermore, the conventional flexible hose requires a sound absorbing material disposed in the inner circumferential surface of the flexible hose for reducing noise so that the material cost of the flexible hose is increased and the manufacturing process of the flexible hose is complex.

### SUMMARY OF THE INVENTION

The present invention has been developed in order to overcome the above drawbacks and other problems associated with the conventional arrangement. An aspect of the present invention is to provide a flexible hose having better firmness, that is, performance keeping the appearance thereof than the conventional flexible hose by improving the structure of a pipe wall of the flexible hose.

Another aspect of the present invention is to provide a flexible hose reducing the friction noise generated when fluid flowing inside the flexible hose collides with an inner circumferential surface thereof by improving the structure of the inner circumferential surface.

Still another aspect of the present invention is to provide a vacuum cleaner having the above-described flexible hose so that the vacuum cleaner has a better firmness, and a less friction noise.

The above aspect and/or other feature of the present invention can substantially be achieved by providing a flexible hose, which includes a bellow pipe wall with a plurality of peaks and valleys; and an auxiliary peak and auxiliary valley formed in each of the plurality of peaks.

The inner diameter of the auxiliary valley is preferably larger than the inner diameter of the valley.

The auxiliary peak comprises at least two auxiliary peaks, and the auxiliary valley comprises at least one auxiliary valley.

The flexible hose further comprises a noise decreasing part formed at an inner surface of each of the plurality of valleys for decreasing collision of fluid with the inner surface of the valleys. The noise decreasing part is preferably formed in a curved shape.

According to another aspect of the present invention, a vacuum cleaner comprises: a cleaner body; a suction part touching a surface to be cleaned, the suction part drawing-in contaminants on the surface to be cleaned; an extension pipe connected the suction part; and a flexible hose connecting the extension pipe with the cleaner body, wherein the flexible hose comprises: a bellow pipe wall with a plurality of peaks and valleys; and an auxiliary peak and auxiliary valley formed in each of the plurality of peaks.

The inner diameter of the auxiliary valley is preferably larger than the inner diameter of the valley.

The auxiliary peak comprises at least two auxiliary peaks, and the auxiliary valley comprises at least one auxiliary valley.

The flexible hose further comprises a noise decreasing part formed at an inner surface of each of the plurality of valleys for decreasing the collision of fluid with the inner surface of the peaks. The noise decreasing part is preferably formed in a curved shape.

Other objects, advantages and salient features of the invention will become apparent from the following detailed description, which, taken in conjunction with the annexed drawings, discloses preferred embodiments of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:

Fig. 1 is a perspective view illustrating a flexible hose according to an embodiment of the present invention;

Fig. 2 is a sectional view illustrating the flexible hose of Fig. 1 taken along a line II-II' in Fig. 1;

Fig. 3 is a partially enlarged sectional view illustrating the part A of Fig. 2; and

Fig. 4 is a perspective view illustrating an example of a vacuum cleaner employing a flexible hose according to an embodiment of the present invention.

Throughout the drawings, like reference numerals will be understood to refer to like parts, components and structures.

### DETAILED DESCRIPTION OF THE EXEMPLARY EMBODIMENTS

Hereinafter, certain exemplary embodiments of the present invention will be described in detail with reference to the accompanying drawings.

The matters defined in the description, such as a detailed construction and elements thereof, are provided to assist in a comprehensive understanding of the invention. Thus, it is apparent that the present invention may be carried out without those defined matters. Also, well-known functions or constructions are omitted to provide a clear and concise description of exemplary embodiments of the present invention.

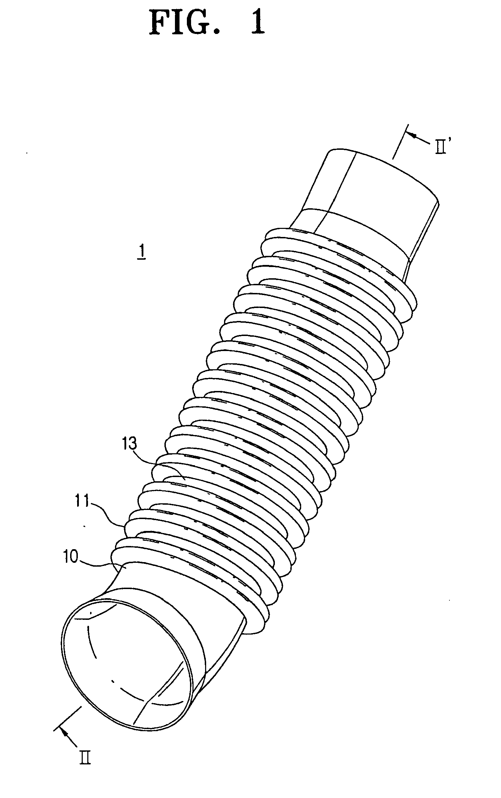

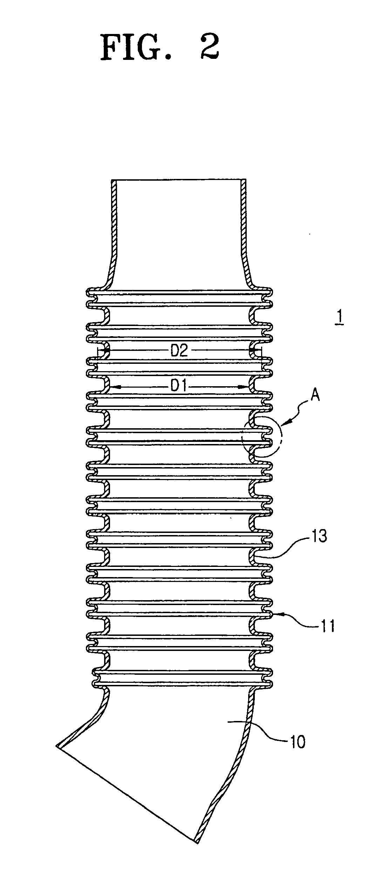

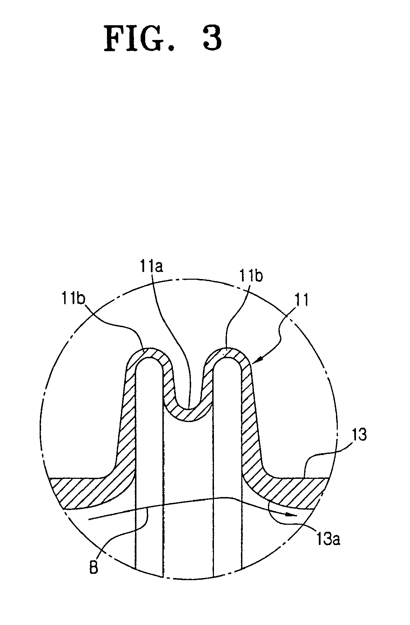

Fig. 1 is a perspective view illustrating a flexible hose according to an embodiment of the present invention, Fig. 2 is a sectional view illustrating the flexible hose of Fig. 1 taken along a line II-II' in Fig. 1, and Fig. 3 is a partially enlarged sectional view illustrating the part A of Fig. 2.

Referring to Figs. 1 and 2, the flexible hose 1 comprises a bellow pipe wall 10 inside of which a fluid flows. The bellow pipe wall 10 is provided with a plurality of peaks 11 and valleys 13.

Referring to Fig. 3, at least one auxiliary valley 11a and at least one auxiliary peak 11b are formed at each of the plurality of peaks 11. Preferably, the auxiliary valley 11a has a larger inner diameter D2 than the inner diameter D1 of the valley 13. In this embodiment, the flexible hose 1 has two auxiliary peaks 11b and one auxiliary valley 11a as shown in Fig. 3; however this should not be considered as limiting.

When external force is applied to the flexible hose 1, and then cleared from the flexible hose 1, the bellow pipe wall 10 of the flexible hose 1 can be easily restored in the original shape due to the at least one auxiliary peak 11b and auxiliary valley 11a formed at the peak 11. Therefore, the flexible hose 1 has a better firmness than the conventional flexible hose.

On the other hand, when the fluid flowing inside the bellow pipe wall 10 collides with an inner circumferential surface of the bellow pipe wall 10, for an example, an inner surface of the valley 13, friction noise may be generated. To prevent the friction noise, the flexible hose 1 has a curved noise decreasing part 13a in the inner surface of the valley 13. As a result, the fluid flowing inside the bellow pipe wall 10 flows in a streamline shape along a direction of arrow B of Fig. 3 by the noise decreasing part 13a so that the friction noise between the fluid and the inner circumferential surface of the bellow pipe wall 10 is decreased.

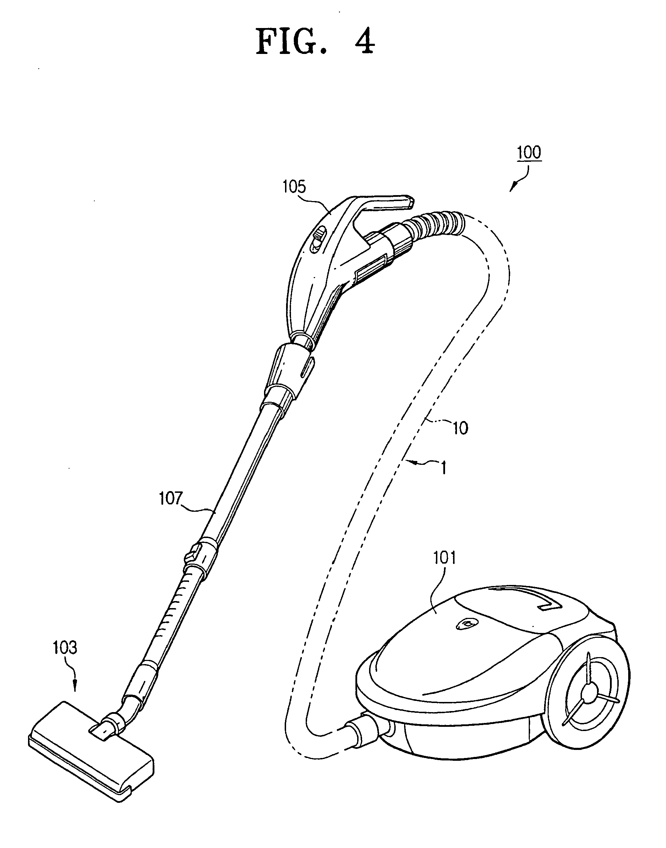

Fig. 4 is a perspective view illustrating an example of a vacuum cleaner employing a flexible hose according to an embodiment of the present invention.

Referring Fig. 4, the vacuum cleaner 100 includes a cleaner body 101, a suction part 103 drawing-in contaminants on a surface to be cleaned, a control part 105 controlling the vacuum cleaner 100, an extension pipe 107 connecting the suction part 103 with the control part 105, and a flexible hose 1 connecting the control part 105 with the cleaner body 101.

The flexible hose 1 has the same structure as that of the flexible hose 1 described above. Therefore, a detailed description thereon is omitted.

In the vacuum cleaner 100 having the structure described above, contaminants drawn-in into the suction part 103 from a surface to be cleaned together with air pass through the extension pipe 107 and the flexible hose 1, and then, are collected in a dust collecting chamber (not shown) in the cleaner body 101.

When the contaminants and air pass through the inside of the flexible hose 1, the contaminants and air flow along the inner circumferential surface of the bellow pipe wall 10 of the flexible hose 1, namely, the noise decreasing part 13a formed in the inner surface of the valley 13. At this time, the noise decreasing part 13a is formed in a curved shape so that the friction between the noise decreasing part 13a and the contaminants and air is decreased. As a result, the friction noise of the flexible hose 1 is decreased.

On the other hand, when some peaks 11 of the bellow pipe wall 10 are deformed to the inside of the bellow pipe wall 10 by the external force applied to the flexible hose 1, the auxiliary peaks 11b and auxiliary valleys 11a formed at the peak 11 can easily restore the bellow pipe wall 10 of the flexible hose 1 to the original shape. In other words, the auxiliary peaks 11b and auxiliary valleys 11a help the flexible hose 1 to keep its appearance.

With the flexible hose according to an embodiment of the present invention, when the flexible hose is deformed, the auxiliary peaks and auxiliary valleys easily restore the flexible hose so as to prevent the flexible hose from keeping a deformed appearance.

Also, because of an improved structure of the inner circumferential surface of the flexible hose, the friction noise between fluid and the flexible hose is decreased.

Furthermore, with the flexible hose according to an embodiment of the present invention, the reinforcing structure for keeping the appearance of the flexible hose and the friction noise preventing structure can be formed in a single piece with the flexible hose so that the productivity of the flexible hose is increased and the manufacturing cost of the flexible hose is decreased.

While the embodiments of the present invention have been described, additional variations and modifications of the embodiments may be apparent to those skilled in the art once they have studied the basic inventive concepts. Therefore, it is intended that the appended claims shall be construed to include both the above embodiments and all such variations and modifications that fall within the scope of the invention.

## Claims

1. A flexible hose comprising:
a bellow pipe wall (10) with a plurality of peaks (11) and valleys (13); and
an auxiliary peak (11b) and an auxiliary valley (11a) formed in each of the plurality of peaks (11).

2. The flexible hose of claim 1, wherein the inner diameter of the auxiliary valley (11a) is larger than the inner diameter of the valley (13).

3. The flexible hose of claim 1, wherein the auxiliary peak (11b) comprises at least two auxiliary peaks, and wherein the auxiliary valley (11a) comprises at least one auxiliary valley.

4. The flexible hose of claim 1, further comprising:
a noise decreasing part (13a) formed at an inner surface of each of the plurality of valleys (13) for decreasing collision of fluid with the inner surface of the valleys.

5. The flexible hose of claim 4, wherein the noise decreasing part (13a) is formed in a curved shape.

6. A vacuum cleaner comprising:
a cleaner body (101);
a suction part (103) touching a surface to be cleaned, the suction part (103) drawing-in contaminants on the surface to be cleaned;
an extension pipe (107) connected the suction part (103); and
a flexible hose (1) according to any of claims 1 to 5, wherein the flexible hose (1) connects the extension pipe (107) with the cleaner body (101).

## Amended claims

### Amended claims in accordance with Rule 86(2) EPC.

**1.** A flexible hose comprising:
a bellow pipe wall (10) with a plurality of peaks (11) and valleys (13);
**characterized by**
an auxiliary peak (11b) and an auxiliary valley (11a) formed in each of the plurality of peaks (11).

**2.** The flexible hose of claim 1, wherein the inner diameter of the auxiliary valley (11a) is larger than the inner diameter of the valley (13).

**3.** The flexible hose of claim 1, wherein the auxiliary peak (11b) comprises at least two auxiliary peaks, and wherein the auxiliary valley (11a) comprises at least one auxiliary valley.

**4.** The flexible hose of claim 1, further comprising:
a noise decreasing part (13a) formed at an inner surface of each of the plurality of valleys (13) for decreasing collision of fluid with the inner surface of the valleys, wherein the noise decreasing part (13a) is formed in a curved shape.

**5.** A vacuum cleaner comprising:
a cleaner body (101);
a suction part (103) touching a surface to be cleaned, the suction part (103) drawing-in contaminants on the surface to be cleaned;
an extension pipe (107) connected the suction part (103); and
a flexible hose (1) according to any of claims 1 to 5, wherein the flexible hose (1) connects the extension pipe (107) with the cleaner body (101).
